# EUROPÄISCHE PATENTSCHRIFT

(11) **EP 1 251 033 B1**
(45) Veröffentlichungstag und Bekanntmachung des Hinweises auf die Patenterteilung: **11.10.2006**
(21) Anmeldenummer: 02007957.0
(22) Anmeldetag: 10.04.2002
(51) Int. Cl.: B60R 9/058, B60R 9/04, B62D 25/06, B62D 65/00

(54) **Mit einem Dachlastträger versehbares Fahrzeugdach**
Vehicle roof with roof-rack holder
Toit de véhicule avec dispositif de retenue pour un porte-bagages de toit

(30) Priorität: 21.04.2001 DE 10119715; 28.11.2001 DE 10158399
(43) Veröffentlichungstag der Anmeldung: 23.10.2002
(73) Patentinhaber: ADAM OPEL AG, 65423 Rüsselsheim (DE)
(72) Erfinder: Stahlhut, Richard, Dipl.-Ing. (FH), 63075 Offenbach (DE); Mathes, Bernhard, 65428 Rüsselsheim (DE); Stever, Tobias, Dipl.-Ing. (BA), 65428 Rüsselsheim (DE); Hürter, Helmut, Dipl.-Ing. (FH), 64572 Büttelborn (DE)

(56) Entgegenhaltungen:
- EP-A- 1 088 704
- DE-A- 19 709 016
- DE-A- 19 853 321
- DE-A- 19 928 955

## Beschreibung

Die Erfindung bezieht sich auf ein mit einem Dachlastträger versehbares Fahrzeugdach mit einem Dachmodul und zwei Seitenholmen, die jeweils über einen nach unten abgesetzten Flansch verfügen, auf denen das Dachmodul aufliegend befestigt ist, wobei ein nach oben offener schmaler Spalt zwischen dem Dachmodul und dem jeweiligen Seitenholm entsteht, sowie den weiteren Merkmalen des Oberbegriffs des Anspruchs 1.
Ein solches Fahrzeugdach ist in der EP 1 088 704 A2 beschrieben. Demnach sind die Böcke Bestandteile des Dachmoduls und werden mit den abgesetzten Flanschen der Seitenholme verschraubt.

Ein Fahrzeugdach ist auch in der DE 197 09 016 beschrieben. Das Dachmodul besteht aus einer Schaumschicht, die mit einer äußeren Lackierung oder einer äußeren Haut versehen ist und an deren Unterseite zur Ausbildung eines Dachhimmels textiles oder folienartiges Bezugsmaterial ankaschiert ist. Außerdem sind in dem Dachmodul Elemente wie Sonnenblenden, Haltegriffe, Lüftungsgitter, Innenleuchten usw. vormontiert, die bei herkömmlicher Bauweise nachträglich eingebaut werden.

Ein solches Dachmodul wird in einem mit nach innen gerichteten Flanschen versehenen Rahmen, der u. a. von den beiden Seitenholmen gebildet wird, eingeklebt, wobei das Dachmodul auf den Flanschen aufliegt und sich ein schmaler Spalt zwischen Dachmodul und dem jeweiligen Seitenholm ausbildet. Dieser Spalt dient als Wasserablaufrinne, in der sich das vom Dachmodul abfließende Wasser sammelt und nach vorn bzw. hinten geleitet wird. Die Schmalheit des Spaltes hat den Vorteil, dass er kaum wahrgenommen wird, so dass das Fahrzeugdach eine durchgehende Außenkonturen zu haben scheint, was einen angenehmen optischen Eindruck vermittelt.

Ein solcher schmaler Spalt lässt sich praktisch nur mit einem Dachmodul realisieren, da dieses - wie erläutert - an die Seitenholme angeklebt bzw. verschraubt wird. Bei einer herkömmlichen Bauweise, bei der eine aus Metall hergestellte Dachplatte mit den Seitenholmen verschweißt wird, liegt die Schweißnaht in der Wasserablaufrinne, so dass diese schon eine bestimmte Breite haben muss, damit die Schweißwerkzeuge angesetzt werden können.

Um auf dem Fahrzeugdach einen Dachlastträger befestigen zu können, werden in der klassischen Bauweise in den Spalt zwischen Dachplatte und Seitenholm Befestigungsvorrichtungen eingeschraubt, wie sie z. B. in der DE 198 53 321 A1 beschrieben sind. Diese bestehen aus einem langgestreckten Bock, der über eine zentrale Schraube am Boden der Wasserablaufrinne befestigt ist und der mit Hinterschnitten versehen ist, in die entsprechende Haken des Dachlastträgerfußes eingreifen. Eine weitere Befestigungsvorrichtung ist in der DE 199 28 955 beschrieben.

Die Befestigung sowohl des Bockes mit dem Fahrzeugdach als auch die Befestigung des Dachlastträgers mit dem Bock muss ausreichend fest sein, damit der Dachlastträger bei einem Unfall nicht vom Fahrzeugdach gerissen wird. Die Schraube benötigt daher eine gewisse radiale Ausdehnung, so dass ein Bock gemäß der DE 198 53 321 A1 in dieser Form nicht in den schmalen Spalt zwischen einem Dachmodul und einem Seitenholm einsetzbar ist.

Das zu lösende Problem besteht somit darin, ein Fahrzeugdach - bestehend aus einem Dachmodul und zwei Seitenholmen, die zwischen sich einen schmalen Spalt einschließen - mit einem Bock für einen Dachlastträger zu versehen, der in der Lage ist, den Dachlastträger ausreichend fest mit dem Dach zu verbinden, und dabei eine wirksame und einfach zu realisierende Verbindung des Dachmoduls mit den Holmen zu realisieren.

Die Lösung des Problems besteht in einem Fahrzeugdach gemäß dem Oberbegriff des Anspruchs 1, das dadurch gekennzeichnet ist, dass das Dachmodul mit dem Flansch verklebt ist, wobei eine Kleberaupe auf einer Bahn verläuft, die vom Spalt aus gesehen jenseits der Böcke verläuft.
Nach dieser Ausgestaltung der Erfindung ergibt sich eine geschlossene Klebenaht, wodurch das Eindringen von Wasser in den Karosserieinnenraum sicher verhindert wird.

Durch die erfindungsgemäße Gestaltung besitzt der Bock außerdem eine ausreichend große Basis, mit der er sicher am Seitenholm befestigt werden kann. Lediglich die eigentlichen Aufnahmeelemente für den Dachlastträgerfuß ragen in den Spalt hinein und können dort mit den entsprechend schmal ausgeführten Gegenstücken am Dachlastträgerfuß verbunden werden.

Mit einer solchen Anordnung wird es somit ermöglicht, auch für ein Fahrzeugdach mit schmalen Wasserablaufrinnen eine Dachlastträgerbefestigung vorzusehen, wobei die Böcke weiterhin mit dem Flansch der Seitenholme verbunden sind, so dass die Dachlast unmittelbar in die Karosserie und nicht in das Dachmodul eingeleitet wird.

Vorzugsweise wird der Bock am Grundkörper mit dem Seitenholm verbunden, wobei ein oder mehrere Formschlussverbindungen vorgesehen sind, die damit ebenfalls unterhalb des Dachmoduls liegen. Dies hat den Vorteil, dass die Verbindung in einem geschützten Bereich liegt, was die Gefahr von Korrosionen minimiert und außerdem der direkten Sicht entzogen ist, so dass die Befestigung ohne Berücksichtigung von ästhetischen Gesichtspunkten gestaltet werden kann.

Für die Anordnung der Formschlussverbindungen ergeben sich zwei Möglichkeiten. Dazu ist zunächst etwas zum Aufbau des Seitenholmes zu sagen. Dieser besteht aus einer Außen- und einer Innenschale, die sich mit ihren Rändern überlappen und dort miteinander verschweißt sind, wobei die innenliegenden Ränder den Flansch zur Auflage des Dachmoduls bilden. Der Rand der Außenschale ist dabei ein wenig breiter als der Rand der Innenschale, so dass der Überlappungsbereich schmaler ist als der Flansch, wobei der Bereich des Flansches, der nur vom Rand der Außenschale gebildet ist, an den von den Schalen gebildeten Hohlraum angrenzt.

Die Befestigung des Bockes kann nun einerseits in dem Bereich erfolgen, in dem die Ränder sich noch nicht überlappen. Dies hat den Vorteil, dass die Befestigung mit dem Dachholm nahe den Aufnahmeelementen liegt, so dass die Hebelarme zwischen diesen und der Befestigung klein sind. In diesem Fall bietet es sich an, die Formschlussverbindung mittel einer gewindeschneidenden und einem Durchzug formenden Flow-Drill-Schraube herzustellen.

Bei einer anderen Lösung erfolgt die Verbindung des Bockes mit den Seitenholmen im Überlappungsbereich. Dies hat den Vorteil, dass die Verbindung in einem doppellagigen Bereich erfolgt, was höhere Haltekräfte zulässt. Außerdem kann die Verbindung mit einer konventionellen Schraubenmutterverbindung erfolgen, da der Flansch von oben und unten zugänglich ist.

Bei den bisher erwähnten Ausführungen der Erfindung erfolgt die Befestigung der Böcke an den Seitenholmen unabhängig von der Befestigung des Dachmoduls. Während die Böcke - wie erläutert - mit den Seitenholmen verschraubt werden, wird das Dachmodul verklebt. Es hat sich aber gezeigt, dass zusätzlich zu der Verklebung eine Verschraubung des Dachmoduls mit den Seitenholmen notwendig sein kann. Für diesen Fall sieht die Erfindung vor, dass die Grundkörper der Böcke jeweils mindestens ein Durchgangsloch aufweisen, das mit einem entsprechenden Durchgangsloch im Flansch des zugehörigen Seitenholmes korrespondiert, durch die jeweils ein im Dachmodul verankerter Schraubbolzen zur Befestigung des Dachmoduls hindurchgeführt ist.

Bei dieser Ausführung wird das Dachmodul mit einem Schraubbolzen versehen, der nach unten absteht. Die Grundkörper der Böcke werden zunächst mit den Seitenholmen schwach verbunden, so dass sie sich beim Lackieren der Karosserie nicht lösen können. Beim Einsetzen des Dachmoduls in einen u. a. von den Seitenholmen gebildeten Dachrahmen dringen die Schraubbolzen durch die paarweise vorhandenen Durchgangslöcher und können von unten jeweils mit einer Schraube gesichert werden. Dadurch wird das Dachmodul an den Seitenholmen gehalten, wobei die Böcke zwischen dem Dachmodul und dem jeweiligen Seitenholm eingeklemmt werden.

Bei dieser Ausführung kann eine etwas einfachere Ausführung der Böcke zum Einsatz kommen. Jeder Bock besteht demnach aus einem langgestreckten flachen Halteblech mit mindestens zwei seitlich abstehenden Laschen, die die Aufnahmeelemente für den Dachlastträger bilden.

Bei dem Halteblech handelt es sich vorzugsweise um ein Stanzteil. Die Laschen werden durch entsprechende Prägungen gegenüber dem Grundkörper etwas nach oben abgesetzt, so dass sie von den Haken des Dachlastträgerfußes untergriffen werden können.

Um die Laschen zu verstärken, können diese zu einem Ring gebogen werden.

Das Dachmodul wird - wie erläutert - zusätzlich zu der Verschraubung mit den Flanschen verklebt, wobei die Kleberaupe auf einer Bahn verläuft, die vom Spalt aus gesehen jenseits des Haltebleches verläuft. Dadurch ergibt sich eine geschlossene Klebenaht, wodurch ein Eindringen von Wasser in den Karosserieinnenraum sicher verhindert wird.

Damit die Hebelwirkung der vom Dachlastträger auf die Karosserie ausgeübten Kräfte nicht zu groß wird, sollte die Befestigung der Haltebleche möglichst nahe am Spalt erfolgen. Dann kann es vorkommen, dass der Schraubbolzen im Bereich der Innenschale des Seitenholmes zu liegen kommt. Für diesen Fall wird die Innenschale des Seitenholmes im Bereich der Befestigung der Haltebleche mit Eindrückungen versehen, in denen die Schraubbolzen und die zugehörigen Muttern angeordnet sind. Dies hat den Vorteil, dass der Seitenholm im Wesentlichen seinen Querschnitt und damit seine Steifigkeit beibehält. Trotzdem kann die Befestigung des Haltebleches nahe an den Spalt herangeführt werden.

Die Eindrückungen können bezogen auf den Seitenholm nach innen oder außen ausgeführt sein. Im letzteren Fall ist im Seitenholm eine Öffnung vorzusehen, um an den Schraubbolzen gelangen zu können.

Im Folgenden sollen die genannten Ausführungsformen der Erfindung jeweils anhand eines Ausführungsbeispiels erläutert werden. Dazu zeigen
- Fig. 1: ein Fahrzeug mit einem Seitenholm und einem Dachmodul,
- Fig. 2: einen Schnitt entlang der Linie II - II der Figur 1 gemäß einer ersten Ausführungsform der Erfindung,
- Fig. 3: einen anderen Bock in einen Schnitt entlang der Linie II - II der Figur 1,
- Fig. 4: eine perspektivische Darstellung eines Bockes gemäß Figur 3,
- Fig. 5: eine perspektivische Darstellung eines als Halteblech ausgeführten Bockes,
- Fig. 6: einen Schnitt entlang der Linie II - II der Figur 1 gemäß einer zweiten Ausführungsform der Erfindung,
- Fig. 7: einen Schnitt entlang der Linie II - II der Figur 1 gemäß einer dritten Ausführungsform der Erfindung.

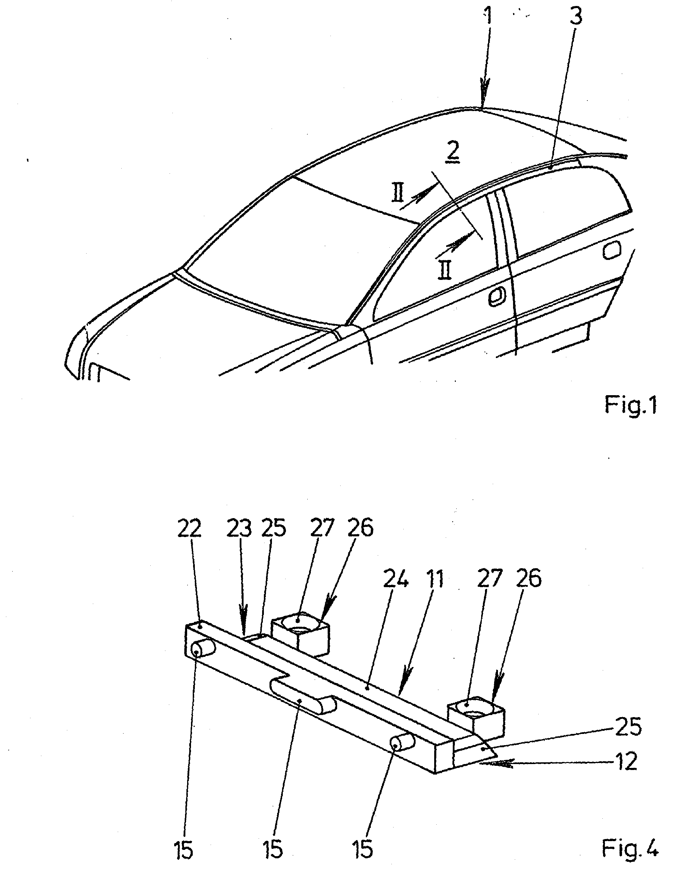

Zunächst wird auf die Figur 1 Bezug genommen. Diese zeigt schematisch ein Kraftfahrzeug mit einem Fahrzeugdach 1. Dieses Fahrzeugdach 1 besteht aus einem Dachmodul 2, das - wie oben schon erläutert - mit verschiedenen Anbauelementen vorgefertigt wird und in einen Dachrahmen eingesetzt wird. Dieser Dachrahmen besteht seitlich aus Seitenholmen 3, von denen nur einer wegen der perspektivischen Darstellung zu erkennen ist.

Bei Dachmodul 2 handelt es sich im Wesentlichen um ein Gebilde aus einer festen Schaumstoffschicht, das an der Oberseite lackiert bzw. mit einer dünnen Blechschale versehen ist. An der Unterseite der Schaumstoffschicht ist ein Formhimmel angeklebt. Gegebenenfalls weist die Schaumstoffschicht Streben zur Versteifung auf.

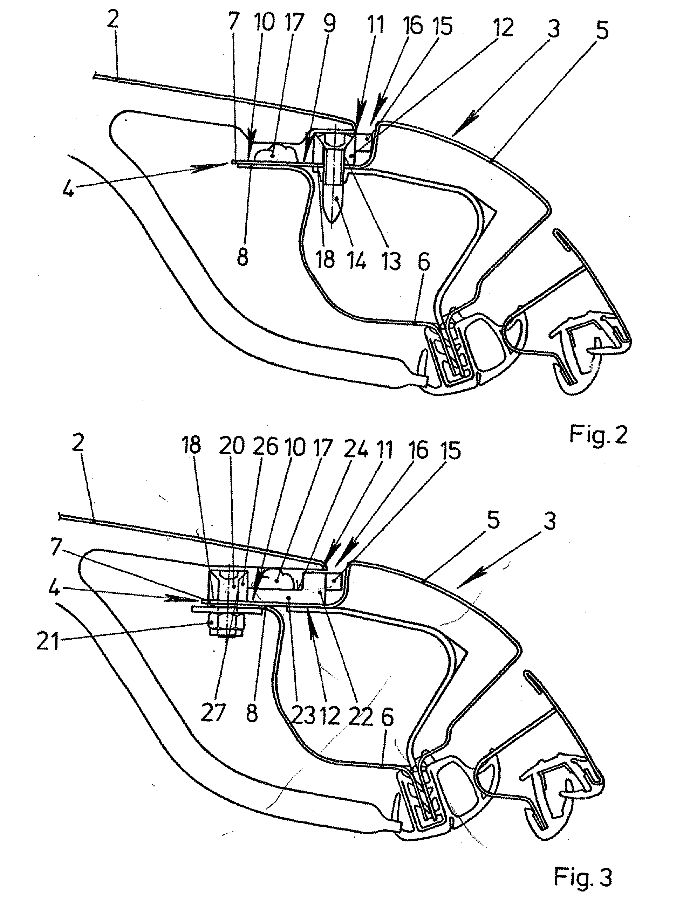

Die Seitenholme 3 weisen nach innen gerichtete Flansche 4 auf, auf denen das Dachmodul 2 mit seinem Randbereich aufliegt und verklebt wird. Zur genaueren Darstellung dieses Bereiches zeigen Figur 2 sowie die Figur 3 einen Querschnitt durch das Dachmodul 2 und den Seitenholm 3. Dieser besteht aus einer Außenschale 5 und einer Innenschale 6, die in ihren Rändern überlappend miteinander verschweißt sind, so dass ein rohrförmiges Gebilde entsteht.

Der nach innen gerichtete Rand 7 der Außenschale 5 ist ein wenig breiter als der Rand 8 der Innenschale 6, so dass sich ein einlagiger Bereich 9 und ein doppellagiger Überlappungsbereich 10 ergibt, die zusammen den Flansch 4 bilden.

Gemäß der Ausführung nach Figur 2 ist ein Bock 11 mit dem Holm 3 im einlagigen Bereich 9 verschraubt. Dazu weist der Bock 11 einen Grundkörper 12 mit Schraubenlöchern 13 auf, durch den eine sogenannte Flow-Drill-Schraube 14 hindurchgesteckt ist, die sich in ein beim Einschraubvorgang bildendes Loch in der Außenschale 5 selbst ein Gewinde furcht. Derartige Schrauben sind z.B. unter der Marke EJOT FDS auf dem Markt erhältlich.

Vom Grundkörper 12 stehen seitlich Aufnahmeelemente 15 ab, die in einen Spalt 16 zwischen dem Dachmodul 3 und dem Seitenholm 4 hineinragen. Der Spalt 16 ist dabei mindestens so breit, dass ein hier nicht dargestellter Fuß eines Dachlastträgers eingesetzt werden kann und mit entsprechenden Haken die Aufnahmeelemente 15 hintergreift, wobei eine Verbindung zwischen dem Bock 11 und dem Dachlastträger hergestellt wird.

Das Dachmodul 3 wird mit einer im doppellagigen Bereich 9 aufgebrachten Kleberaupe 17 mit dem Flansch verklebt, wobei sich der äußere Rand des Dachmoduls 2 über den Grundkörper 12 erstreckt und diesen abdeckt. Dazu weist die Schaumstoffschicht des Dachmoduls 2 eine entsprechende Ausnehmung auf, in die der Grundkörper 12 eingepasst ist.

Um zu verhindern, dass in das von der Flow-Dill-Schraube erzeugte Schraubenloch 13 im Seitenholm 3 Wasser eindringt, wird zwischen dem Grundkörper 12 und dem Flansch 4 ein Dichtband 18 gelegt.

Die Figur 3 zeigt einen anderen Bock 11. Bei diesem wird der Grundkörper 12 im doppellagigen Bereich 9 mit dem Seitenholm 3 verbunden, und zwar mittels einer Schraube 20 und einer Mutter 21. Der Grundkörper 12 besteht dazu aus einer Schiene 22, an der sich nach innen ein Abschnitt 23 mit einer Bahn 24 für die Kleberaupe 17 anschließt, die in Rampen 25 endet. Danach schließen sich weiter nach innen zwei Schraubenaufnahmen 26 mit Schraubenlöchern 27 an, durch die die Schrauben 20 hindurchgesteckt werden. Das Dachmodul 3 wird - wie auch in der vorherigen Ausführung - mit dem Flansch 4 verklebt, wobei die Kleberaupe 17 im Bereich der Böcke 11 über die Bahn 24 verläuft.

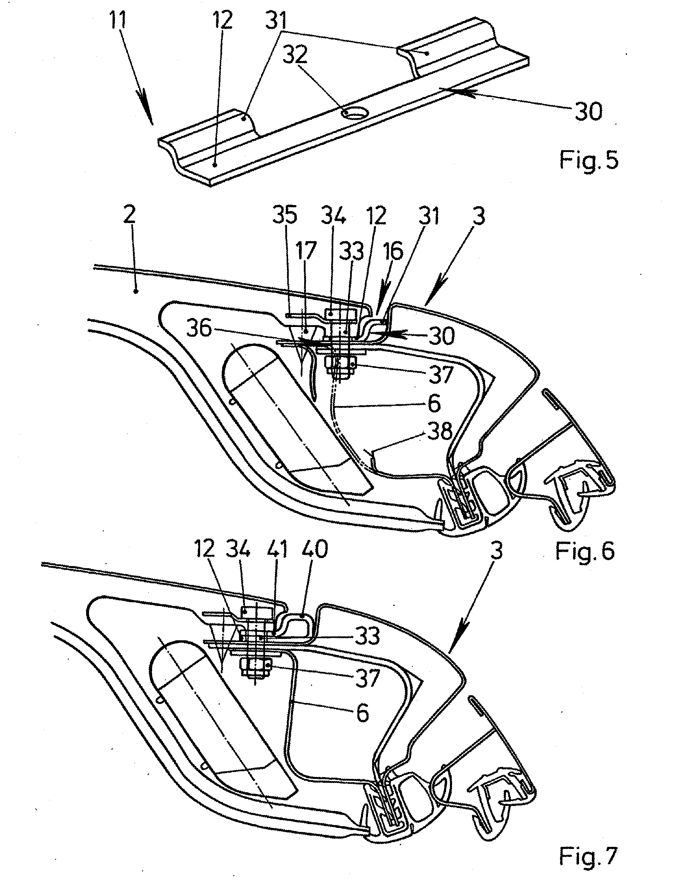

In Figur 4 ist ein einzelner Bock 11 gemäß Figur 3 dargestellt. Er besteht aus der schon erwähnten Schiene 22, dem Abschnitt 23 mit der Bahn 24 und den Schraubenaufnahmen 26. An der von der Bahn 24 abgewandten Seite der Schiene 22 schließen sich Aufnahmeelemente 15 in Form von Bolzen an, die von entsprechenden Haken am Fuß des Dachlastträgers hintergriffen werden.

Für eine Ausführung des Bockes 11 nach Figur 2 wird auf den Abschnitt 23 mit der Bahn 24 für die Kleberaupe 17 verzichtet, so dass die Schraubenaufnahmen 26 unmittelbar an die Schiene 22 anschließen bzw. in der Schiene ausgebildet sind.

Gemäß den Figuren 5, 6 und 7 kann ein Bock 11 auch durch ein Halteblech 30 realisiert sein, das aus einem länglichen flachen Grundkörper 12 mit zwei seitlichen, nach oben abgesetzten Laschen 31 gebildet ist, wobei die Laschen als Aufnahmeelemente 15 für einen Dachlastträger fungieren. Das Halteblech 30 entsteht durch Stanzen eines Bleches entsprechender Dicke und durch Ausprägen der beiden Laschen 31. An zentraler Stelle des Grundkörpers 12 befindet sich ein Durchgangsloch 32.

Die Anordnung eines solchen Haltebleches 30 kann den Figuren 6 und 7 entnommen werden. Diese zeigen den Schnitt durch einen Seitenholm 3 und ein Dachmodul 2, deren Aufbau dem oben schon beschriebenen Ausführungsbeispiel entspricht, so dass hier nicht näher darauf eingegangen werden muss. Allerdings ist im Unterschied zu dem vorhergehend beschriebenen Dachmodul das Dachmodul 2 gemäß dieser Ausführung mit einem Schraubbolzen 33 versehen, dessen Kopf 34 in der Schaumschicht des Dachmoduls 2 verankert ist und bei der Herstellung des Dachmoduls 2 mit eingeschäumt wurde. Zur besseren Übertragung der Kräfte ist der Kopf 34 mit einem Verstärkungsblech 35 verbunden, das vollständig in der Schaumschicht integriert ist. Auf dem Flansch 4 liegt der Grundkörper 12 des Haltebleches 30 zwischen dem Rand des Dachmoduls 2 und dem Seitenholm 3, wobei die Laschen 31 in den Spalt 16 hineinragen. Der Schraubbolzen 33 durchdringt das Durchgangsloch 32 im Halteblech 30 sowie ein weiteres Durchgangsloch 36 im Flansch 4 und wird von unten durch eine Mutter 37 gesichert, so dass das Dachmodul 2 fest unter Zwischenschaltung des Haltebleches 30 am Seitenholm 3 anliegt. Der Querschnitt der Durchgangslöcher 32, 36 ist so groß gewählt, dass Toleranzen ausgeglichen werden können.

Die Kleberaupe 17 befindet sich auf einer Bahn, die aus der Sicht des Spaltes 16 außen an dem Halteblech 30 vorbeiläuft. Zur weiteren Abdichtung kann zwischen dem Halteblech 30 und dem Flansch 4 eine dünne Klebeschicht vorgesehen sein.

Um einen möglichst großen Querschnitt des Seitenholmes 3 zu erhalten, ist die Innenschale 6 häufig relativ weit außen an der Außenschale 5 angesetzt, so dass die Mutter 37 sich im Bereich der Innenschale 6 des Seitenholmes 3 befindet, was durch die strichpunktierte Linie in Fig. 6 angedeutet ist. Um dies zu verhindern, erhält gemäß der Fig. 6 die Innenschale 6 des Seitenholmes 3 Eindrückungen nach außen, wodurch die Mutter 37 im Seitenholm zu liegen kommt. Um Zugang zur Mutter 37 zu erhalten, ist unterhalb der Befestigung eine Öffnung 38 im Seitenholm vorgesehen.

Die Darstellung von Seitenholm 3 und Dachmodul 2 der Figur 7 entspricht genau der Figur 6, so dass hier nicht näher darauf eingegangen werden braucht. Allerdings kommt hier ein etwas anderes Halteblech 30 zum Einsatz. Der Unterschied besteht darin, dass die Laschen 31 zu einem Ring 40 gebogen sind, wobei die Enden 41 auf dem Grundkörper 12 zum Liegen kommen, so dass dieser im Prinzip doppellagig ist. Außerdem ist bei dieser Ausführung die Innenschale 6 nach innen gedrückt, so dass die Mutter 37 außerhalb des Seitenholms 3 in der Eindrückung liegt. Es versteht sich von selbst, dass diese Form der Eindrückung auch bei einer Ausführung des Haltebleches nach Fig. 6 möglich ist und umgekehrt.

Wenn in den Erläuterungen des Ausführungsbeispiels von der Befestigung im Singular gesprochen wird, so ist doch klar, dass zwei Seitenholme mit in der Regel je zwei Böcken vorgesehen sind, die alle in derselben beschriebenen Weise miteinander verbunden sind.

### Bezugszeichenliste

- 1: Fahrzeugdach
- 2: Dachmodul
- 3: Seitenholm
- 4: Flansch
- 5: Außenschale

- 6: Innenschale
- 7: Rand
- 8: Rand
- 9: Bereich
- 10: Überlappungsbereich

- 11: Bock
- 12: Grundkörper
- 13: Schraubenloch
- 14: Flow-Drill-Schraube
- 15: Aufnahmeelemente

- 16: Spalt
- 17: Kleberaupe
- 18: Dichtband

- 20: Schraube

- 21: Mutter
- 22: Schiene
- 23: Abschnitt
- 24: Bahn
- 25: Rampe

- 26: Schraubenaufnahme
- 27: Schraubenloch

- 30: Halteblech
- 31: Lasche
- 32: Durchgangsloch
- 33: Schraubbolzen
- 34: Kopf
- 35: Verstärkungsblech

- 36: Durchgangsloch
- 37: Mutter
- 38: Öffnung
- 40: Ring
- 41: Enden

## Patentansprüche

1. Mit einem Dachlastträger versehbares Fahrzeugdach (1) mit einem Dachmodul (2) und zwei Seitenholmen (3), die jeweils über einen nach unten abgesetzten Flansch (4) verfügen, auf denen das Dachmodul (2) aufliegend befestigt ist, wobei ein nach oben offener schmaler Spalt (16) zwischen dem Dachmodul (2) und dem jeweiligen Seitenholm (3) entsteht, wobei auf den Flanschen (4) Böcke (11) durch eine Verschraubung befestigt sind, die jeweils aus einem Grundkörper (12) und Aufnahmeelementen (15) für einen Dachlastträger bestehen, wobei sich der Grundkörper (12) unterhalb des Dachmoduls (2) befindet und die Aufnahmeelemente (15) vom Grundkörper (12) abstehend in den nach oben offenen Spalt (16) zwischen dem Dachmodul (2) und dem jeweiligen Seitenholm (4) hineinragen, **dadurch gekennzeichnet, dass** das Dachmodul (2) mit dem Flansch (4) verklebt ist, wobei eine Kleberaupe (17) auf einer Bahn verläuft, die vom Spalt (16) aus gesehen jenseits der Böcke (11) verläuft.

2. Fahrzeugdach nach Anspruch 1, **dadurch gekennzeichnet, dass** die Böcke (11) mit ihren Grundkörpern (12) jeweils in einer oder mehreren Formschlussverbindungen unterhalb des Dachmoduls (2) befestigt sind.

3. Fahrzeugdach nach Anspruch 2, **dadurch gekennzeichnet, dass** jeder Seitenholm (3) aus einer Außenschale (5) und einer Innenschale (6) gebildet ist, die sich im Randbereich überlappen, wobei die Formschlussverbindungen außerhalb des Überlappungsbereiches (10) in einem Bereich (9) der Außenschale (5) oberhalb des von den Schalen (5, 6) gebildeten Hohlraums erfolgen.

4. Fahrzeugdach nach Anspruch 3, **dadurch gekennzeichnet, dass** die Formschlussverbindung mittels einer gewindeschneidenden und einen Durchzug formenden Flow-Drill-Schraube (14) hergestellt ist.

5. Fahrzeugdach nach Anspruch 2, **dadurch gekennzeichnet, dass** jeder Seitenholm (3) aus einer Außenschale (5) und einer Innenschale (6) gebildet ist, die sich im Randbereich überlappen, wobei die Formschlussverbindungen im Überlappungsbereich (10) erfolgen.

6. Fahrzeugdach nach Anspruch 2, **dadurch gekennzeichnet, dass** die Grundkörper (12) der Böcke (11) jeweils mindestens ein Durchgangsloch (32) aufweisen, das mit einem entsprechenden Durchgangsloch im Flansch (4) des zugehörigen Seitenholms (3) korrespondiert, durch die jeweils ein im Dachmodul (2) verankerter Schraubbolzen (33) zur Befestigung des Dachmoduls (2) hindurchgeführt ist.

7. Fahrzeugdach nach Anspruch 6, **dadurch gekennzeichnet, dass** jeder Bock (11) aus einem langgestreckten flachen Halteblech (30) mit mindestens zwei seitlich abstehenden, die Aufnahmeelemente (15) bildenden Laschen (31) besteht.

8. Fahrzeugdach nach Anspruch 7, **dadurch gekennzeichnet, dass** das Halteblech (30) ein Stanzteil ist, wobei die Laschen (31) durch entsprechende Prägungen gebildet sind, die gegenüber dem den Grundkörper (12) bildenden Abschnitt des Haltebleches (30) nach oben abgesetzt sind.

9. Fahrzeugdach nach Anspruch 7 oder 8, **dadurch gekennzeichnet, dass** die Laschen (31) einen geschlossenen Ring (40) bilden.

10. Fahrzeugdach nach einem der Ansprüche 6 bis 9, **dadurch gekennzeichnet, dass** das Dachmodul (2) zusätzlich mit den Flanschen (4) verklebt ist, wobei die Kleberaupe (17) auf einer Bahn verläuft, die vom Spalt (16) aus gesehen jenseits des Haltebleches (30) verläuft.

11. Fahrzeugdach nach einem der Ansprüche 6 bis 10, **dadurch gekennzeichnet, dass** auf den Schraubbolzen (33) jeweils eine Mutter (37) aufgeschraubt ist, die an der Unterseite des jeweiligen Flansches (4) anliegt, und dass die Innenschalen (6) der Seitenholme (3) Eindrückungen zur Aufnahme der Muttern (37) aufweist.

## Claims

1. A vehicle roof (1) that is adapted to be provided with a roof rack and which comprises a roof module (2) and two side runners (3) each of which has a downwardly off-set flange (4) on which the roof module (2) rests and to which it is fastened, wherein an upwardly open narrow gap (16) is formed between the roof module (2) and the respective side runner (3), wherein bearers (11) are fastened to the flanges (4) by means of a bolt-like connection and each consists of a base body (12) and seating elements (15) for a roof rack, wherein the base body (12) is located below the roof module (2) and the seating elements (15) protrude from the base body (12) and project into the upwardly open gap (16) between the roof module (2) and the respective side runner (4), **characterised in that** the roof module (2) is bonded to the flange (4), wherein a bead of adhesive (17) extends along a track which runs on the other side of the bearers (11) as seen from the gap (16).

2. A vehicle roof in accordance with Claim 1, **characterised in that** the bearers (11) are each fastened by their base bodies (12) in one or more interlocking connections below the roof module (2).

3. A vehicle roof in accordance with Claim 2, **characterised in that** each side runner (3) is formed from an outer shell (5) and an inner shell (6) which overlap in the boundary region, wherein the interlocking connections are effected outside the overlapping region (10) in a region (9) of the outer shell (5) above the cavity formed by the shells (5, 6) .

4. A vehicle roof in accordance with Claim 3, **characterised in that** the interlocking connection is produced by means of a hole-forming, thread-cutting Flow-Drill screw (14).

5. A vehicle roof in accordance with Claim 2, **characterised in that** each side runner (3) is formed from an outer shell (5) and an inner shell (6) which overlap in the boundary region, wherein the interlocking connections are effected in the overlapping region (10).

6. A vehicle roof in accordance with Claim 2, **characterised in that** the base bodies (12) of the bearers (11) each comprise at least one through-hole (32) which corresponds to a corresponding through-hole in the flange (4) of the associated side runner (3) and through each of which there is passed a threaded stud (33) that is anchored in the roof module (2) for the purposes of attaching the roof module (2).

7. A vehicle roof in accordance with Claim 6, **characterised in that** each bearer (11) consists of an elongated flat retaining plate (30) having at least two laterally protruding brackets (31) which form the seating elements (15).

8. A vehicle roof in accordance with Claim 7, **characterised in that** the retaining plate (30) is a stamped part, wherein the brackets (31) are in the form of suitable pressings which are off-set in the upward direction with respect to the section of the retaining plate (30) forming the base body (12).

9. A vehicle roof in accordance with Claim 7 or 8, **characterised in that** the brackets (31) form a closed ring (40) .

10. A vehicle roof in accordance with any of the Claims 6 to 9, **characterised in that** the roof module (2) is additionally bonded to the flanges (4), wherein the bead of adhesive (17) extends along a track which runs on the other side of the retaining plate (30) as seen from the gap (16).

11. A vehicle roof in accordance with any of the Claims 6 to 10, **characterised in that** a respective nut (37) that rests against the lower surface of the respective flange (4) is screwed onto each threaded stud (33), and **in that** the inner shells (6) of the side runners (3) comprise indentations for the seating of the nuts (37).

## Revendications

1. Toit de véhicule (1) avec dispositif de retenue pour un porte-bagages de toit, avec un module de toit (2) et deux longerons latéraux (3) qui sont chacun équipés d'une bride (4) décalée vers le bas sur laquelle le module de toit est fixé en appui, de sorte qu'une fente étroite (16) ouverte vers le haut est formée entre le module de toit (2) et le longeron latéral correspondant (3), des pattes d'attache (11) étant fixées sur les brides (4) au moyen d'un assemblage à boulons, lesquelles pattes d'attache sont constituées chacune d'un corps de base (12) et d'éléments de réception (15) pour un dispositif de retenue pour un porte-bagages de toit, le corps de base (12) se trouvant en dessous du module de toit (2) et les éléments de réception (15) faisant saillie à partir du corps de base (12) dans la fente (16) ouverte vers le haut entre le module de toit (2) et le longeron latéral correspondant (4), **caractérisé en ce que** le module de toit (2) est collé avec la bride (4), un cordon de colle (17) s'étendant sur un tronçon qui, vu à partir de la fente (16), s'étend au-delà des pattes d'attache (11).

2. Toit de véhicule selon la revendication 1, **caractérisé en ce que** les pattes d'attache (11) avec leurs corps de base (12) sont fixées chacune par un assemblage ou par plusieurs assemblages à fermeture géométrique en dessous du module de toit (2).

3. Toit de véhicule selon la revendication 2, **caractérisé en ce que** chaque longeron latéral (3) est constitué par une coque extérieure (5) et une coque intérieure (6) qui se chevauchent dans la zone marginale, les assemblages à fermeture géométrique se faisant à l'extérieur de la zone de chevauchement (10) dans une zone (9) de la coque extérieure (5) au-dessus de l'espace creux formé par les coques (5, 6).

4. Toit de véhicule selon la revendication 3, **caractérisé en ce que** l'assemblage à fermeture géométrique est fabriqué à l'aide d'une vis Flow-Drill (14) taraudeuse et formant un passage.

5. Toit de véhicule selon la revendication 2, **caractérisé en ce que** chaque longeron latéral (3) est constitué par une coque extérieure (5) et une coque intérieure (6) qui se chevauchent dans la zone marginale, les assemblages à fermeture géométrique se faisant dans la zone de chevauchement (10).

6. Toit de véhicule selon la revendication 2, **caractérisé en ce que** les corps de base (12) des pattes d'attache (11) comportent chacune au moins un trou débouchant (32) qui correspond avec un trou débouchant dans la bride (4) du longeron latéral associé (3) à travers lequel est enfilé un boulon fileté (33) ancré dans le module de toit (2) pour la fixation du module de toit (2).

7. Toit de véhicule selon la revendication 6, **caractérisé en ce que** chaque patte d'attache (11) est constituée d'une tôle de fixation (30) plate allongée avec au moins deux colliers de fixation (31) faisant saillie latéralement et formant les éléments de réception (15).

8. Toit de véhicule selon la revendication 7, **caractérisé en ce que** la tôle de fixation (30) est une pièce d'estampage, les colliers de fixation (31) étant formés par des caractéristiques correspondantes qui sont décalés vers le haut par rapport au tronçon de la tôle de fixation (30) formant le corps de base (12).

9. Toit de véhicule selon la revendication 7 ou 8, **caractérisé en ce que** les pattes d'attache (31) forment un anneau fermé (40).

10. Toit de véhicule selon l'une quelconque des revendications 6 à 9, **caractérisé en ce que** le module de toit (2) est, en plus, collé avec les brides (4), le cordon de colle (17) s'étendant sur un tronçon qui, vu à partir de la fente (16), s'étend au-delà de la tôle de fixation (30).

11. Toit de véhicule selon l'une quelconque des revendications 6 à 10, **caractérisé en ce qu'**un écrou (37), qui s'appuie sur la face inférieure de la bride correspondante (4), est vissé sur chaque boulon fileté (33) et **en ce que** la coque intérieure (6) des longerons latéraux (3) présente des empreintes pour le logement des écrous (37).
